# EUROPÄISCHE PATENTSCHRIFT

(11) **EP 1 752 253 B1**
(45) Veröffentlichungstag und Bekanntmachung des Hinweises auf die Patenterteilung: **04.08.2010**
(21) Anmeldenummer: 06118799.3
(22) Anmeldetag: 11.08.2006
(51) Int. Cl.: B23Q 3/10

(54) **Spannvorrichtung sowie Verfahren zum Bearbeiten von an einer solchen Spannvorrichtung gespannten Werkstücken**
Clamping device and method for machining a workpiece clamped on such a clamping device
Dispositif de serrage et procédé pour usiner des pièces à travailler serrées sur un tel dispositif de serrage

(30) Priorität: 12.08.2005 DE 102005038407
(43) Veröffentlichungstag der Anmeldung: 14.02.2007
(73) Patentinhaber: Ludwig Ehrhardt GmbH, 35321 Laubach (DE)
(72) Erfinder: Thoelen, Johannes, 57271, Hilchenbach (DE); Klepsch, Werner, 67435, Neustadt (DE)
(74) Vertreter: von Ahsen, Erwin-Detlef

(56) Entgegenhaltungen:
- WO-A-93/24271
- WO-A-97/39655
- US-A- 4 968 012
- US-A- 5 481 811
- US-A- 5 788 225

## Beschreibung

Die Erfindung betrifft eine Spannvorrichtung mit Versteifungsplatte zum Spannen von Werkstücken, Wechselpaletten oder Vorrichtungen mit einem oder mehreren ersten Spannmitteln, welche eine erste Spannebene bilden, und einem oder mehreren zweiten Spannmitteln, welche eine zweite Spannebene bilden, die unter einem Winkel, vorzugsweise rechtwinklig, zur ersten Spannebene angeordnet ist. Ferner betrifft die Erfindung ein Verfahren zum Bearbeiten von Werkstücken, welche an einer solchen Spannvorrichtung gespannt sind.

Eine solche Spannvorrichtung gemäß dem Oberbegriff von Anspruch 1 und ein solches Verfahren sind aus der WO 97/39655 A bekannt.

Die Spannvorrichtung und das Verfahren zum Bearbeiten von Werkstücken soll hinsichtlich der Bearbeitungsgenauigkeit gesteigert werden.

Dazu ist an den Spannmitteln der Spannebene, an der gerade kein Werkstück, Palette oder Vorrichtung gespannt ist, eine Versteifungsplatte gespannt. Die Versteifungsplatte sollte dabei so ausgelegt sein, daß sie hinsichtlich ihrer Steifigkeit und/oder ihres Verforinungsverhaltens der Steifigkeit bzw. dem Verformungsverhalten des Werkstücks, der Wechsel palette oder der Vorrichtung entspricht. Spannvorrichtungen verformen sich nämlich elastisch unter den in der Werkzeugmaschine auftretenden Bearbeitungskräften. Wenn nun das zu bearbeitende Werkstück einmal in der ersten und dann in der zweiten Spannebene gespannt ist, verändert sich hierdurch die Steifigkeit des Gesamtgebildes aus Spannvorrichtung und den daran gespannten Elementen und damit die Verformung unter den Bearbeitungskräften. Dieses geht zu Lasten der Werkstückgenauigkeit. Aufgrund der Versteifungsplatte, die an der jeweils gerade freien Spannebene gespannt ist, bleibt die Steifigkeit und damit das Verformungsverhalten des Gesamtgebildes gleich. Hierdurch wird die Bearbeitungsgenauigkeit gesteigert.

Nach einer Weiterbildung der Erfindung ist die Spannvorrichtung mit Durchbrüchen versehen, so dass das zu bearbeitende Werkstück gleichsam auch von seiner Rückseite, also von der der Spannvorrichtung zugewandten Seite her, bearbeitet werden kann. Hierdurch ist sogar eine Sechs-Seiten-Bearbeitung des zu spannenden Werkstücks möglich.

Die Erfindung wird nachfolgend anhand eines in der Zeichnung dargestellten Ausführungsbeispiels näher erläutert. Es zeigen:
- Fig. 1: eine Spannvorrichtung mit den Erfindungsmerkmalen in perspektivischer Darstellung,
- Fig. 2: die Spannvorrichtung gemäß Fig. 1 mit Wechselpalette und Versteifungsplatte in perspektivischer Explosionsdarstellung,
- Fig. 3: die Spannvorrichtung gemäß Fig. 1 mit angebrachter Wechsel palette und Versteifungsplatte in perspektivischer Darstellung,
- Fig. 4: die Spannvorrichtung gemäß Fig. 3 mit Wechselpalette und Versteifungsplatte in einer anderen perspektivischen Ansicht.

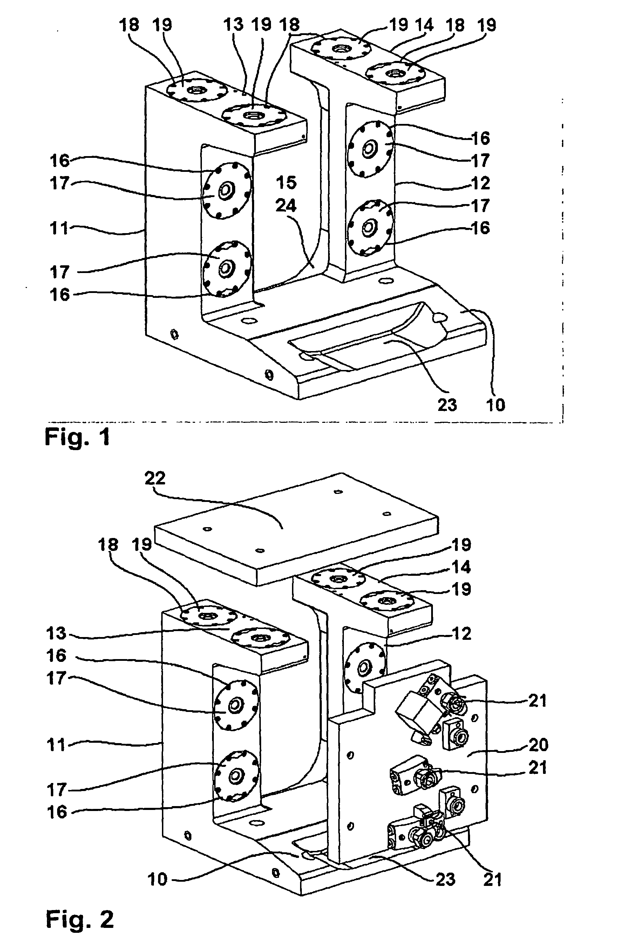

Die Spannvorrichtung weist einen Fuß 10 auf, mittels dessen die Spannvorrichtung beispielsweise auf einem Maschinentisch einer Werkzeugmaschine befestigbar, insbesondere verschraubbar, ist. Auf dem Fuß 10 sind zwei voneinander beabstandete aufrechte Säulen 11, 12 vorgesehen, welche jeweils an ihrem vom Fuß 10 abgewandten Ende ein balkonartig überhängendes Plateau 13, 14 tragen. Fuß 10, Säulen 11, 12 und Plateaus 13, 14 sind im vorliegenden Fall einstückig miteinander verbunden. Die Spannvorrichtung kann aber auch als Schweißkonstruktion ausgebildet sein oder Fuß 10, Säulen 11, 12 sowie Plateaus 13, 14 sind miteinander verschraubt oder auf andere geeignete Weise miteinander verbunden. Betrachtet man die Spannvorrichtung in einer Seitenansicht (in Fig. 1 von links vorne gesehen), bilden der Fuß 10, die Säulen 11, 12 sowie die Plateaus 13, 14 ein nach vorne offenes U. Zwischen den Säulen 11, 12 und damit auch zwischen den Plateaus 13, 14 ist ein Freiraum 15 vorgesehen, dessen Sinn weiter unten noch näher beschrieben wird.

An den Säulen 11, 12 sind jeweils zwei übereinander angeordnete Schnellspannzylinder 16 vorgesehen, wie sie beispielsweise aus der DE 296 15 613 U1 bekannt sind. Die Schnellspannzylinder 16 sind an der Innenseite des von der Spannvorrichtung gebildeten U der Säulen 11, 12 angeordnet. Sie bilden mit ihren Auflageflächen 17 eine erste Spannebene, wobei die Auflageflächen 17 im vorliegenden Fall tatsächlich in einer gemeinsamen Ebene, also zueinander fluchtend, angeordnet sind. Dieses ist aber nicht notwendigerweise der Fall. Bei bestimmten, abgestuften Werkstücken kann es durchaus auch sinnvoll sein, daß die Schnellspannzylinder 16 bzw. ihre Auflageflächen 17 zueinander abgestuft sind, so daß eine abgestufte "Spannebene" entsteht.
Auf den Plateaus 13, 14 sind an deren Oberseite, also an der von dem Fuß 10 abgewandten Seite, weitere Schnellspannzylinder 18 angeordnet, deren Zahl und Anordnung der Zahl und Anordnung der Schnellspannzylinder 16 an der Innenseite der Säulen 11, 12 entspricht. Die Auflageflächen 19 dieser weiteren Schnellspannzylinder 18 bilden wiederum eine gemeinsame, zweite Spannebene, wobei die Auflageflächen 18 wiederum zueinander fluchten, also in einer gemeinsamen Ebene angeordnet sind. Aber auch hier gilt, daß für entsprechend abgestufte Werkstücke auch die Auflageflächen 18 zueinander abgestuft angeordnet sein können, analog zu den Auflageflächen 17 der ersten Schnellspannzylinder 16.

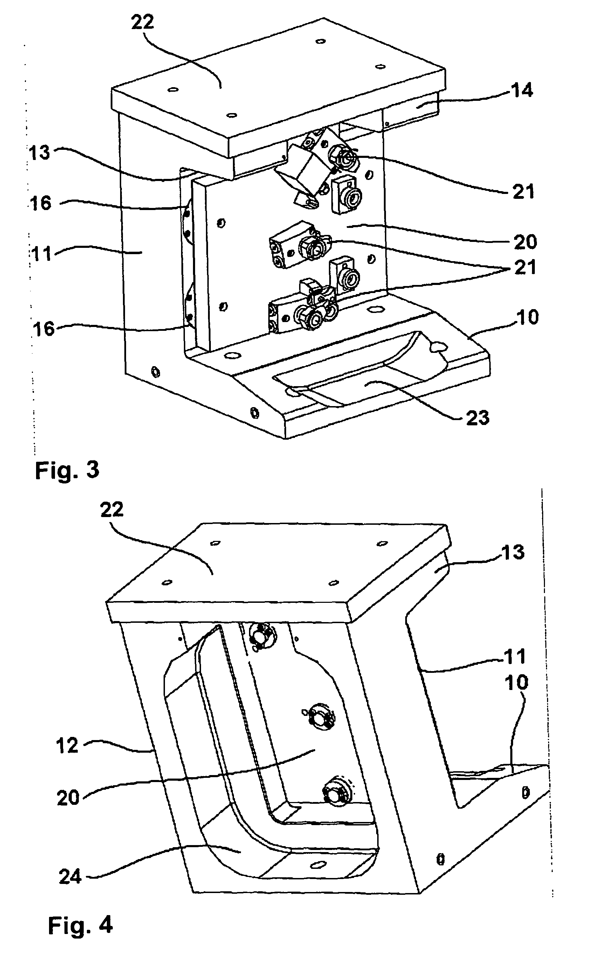

Wie in Fig. 2 bis 4 gezeigt, wird mittels der Schnellspannzylinder 16 bzw. 18 eine Wechselpalette 20 gespannt, welche an ihrer Oberseite Spanneinrichtungen, im vorliegenden Fall Schwenkspanner 21, zum Spannen eines zu bearbeitenden Werkstücks aufweist. Die Wechsel palette 20 wird dabei in an sich bekannter Art durch Einzugsnippel mittels der Schnellspannzylinder 16 bzw. 18 gespannt. Im vorliegenden Fall ist die Wechsel palette 20 an den Säulen 11, 12 mittels der Schnellspannzylinder 16 gespannt. Die weiteren Schnellspannzylinder 18 spannen in an sich bekannter Art mittels Einzugsnippel eine Versteifungsplatte 22. Die Versteifungsplatte 22 entspricht hinsichtlich ihrer Steifigkeit und/oder ihres Verformungsverhaltens der Wechselpalette 20, so daß die Wechselpalette 20 alternativ auch mittels der weiteren Schnellspannzylinder 18 an den Plateaus 13, 14 gespannt werden kann und dann die Versteifungsplatte 22 mittels der ersten Schnellspannzylinder 16 an den Säulen 11, 12. Auf diese Weise entstehen für die Wechselpalette 20 zwei unterschiedliche, unter einem bestimmten Winkel zueinander stehende Spannebenen an der Spannvorrichtung, wobei im vorliegenden Fall die beiden Spannebenen rechtwinklig zueinander angeordnet sind. Das auf der Wechselpalette 20 gespannte Werkstück läßt sich somit in zwei unterschiedlichen Orientierungen spannen und mit höherem Freiheitsgrad bearbeiten.

Im gezeigten Ausführungsbeispiel sind zwei unterschiedliche Spannebenen, nämlich einerseits durch die Schnellspannzylinder 16 und andererseits durch die Schnellspannzylinder 18, vorgesehen. Selbstverständlich können analog auch an den noch freien Seiten der Spannvorrichtung weitere Schnellspannzylinder angeordnet sein, so daß weitere Spannebenen entstehen.

Bei dem gezeigten Ausführungsbeispiel ist eine ebene (geschlossene) Wechselpalette 20 an der Spannvorrichtung gespannt. Die Wechselpalette 20 kann aber auch mit Durchbrüchen analog zum Freiraum 15 ausgebildet sein oder, wie bereits weiter oben angedeutet, das Werkstück direkt mittels an ihm befestigter Einzugsnippel an den Schnellspannzylindern 16 bzw. 18 gespannt werden. In diesem Fall ist es dann möglich, das Werkstück auch von hinten, also durch den Freiraum 15, zu bearbeiten. Ausfräsungen 23 am Fuß 10 bzw. 24 an der Rückseite der Spannvorrichtung sorgen für einen ungehinderten Zugriff durch die Maschinenspindel. Da die Ausfräsungen 23 und 24 aber zu Lasten der Steifigkeit der Spannvorrichtung gehen, können sie erforderlichenfalls auch entfallen oder mit Versteifungsrippen versehen sein.

Die Spannebenen können anstelle durch die Auflageflächen 17, 19 der Schnellspannzylinder 16, 18 auch durch die der Wechselpalette 20 bzw. Versteifungsplatte 22 zugewandten Oberseiten der Säulen 11, 12 bzw. der Plateaus 13, 14 gebildet werden. In diesem Fall sind die Schnellspannzylinder 16, 18 so eingelassen, daß die Auflageflächen 17, 19 um einen bestimmten Wert tiefer liegen.

### Bezugszeichenliste:

- 10: Fuß
- 11: Säule
- 12: Säule
- 13: Plateau
- 14: Plateau
- 15: Freiraum
- 16: Schnellspannzylinder
- 17: Auflagefläche
- 18: Schnellspannzylinder
- 19: Auflagefläche
- 20: Wechselpalette
- 21: Schwenkspanner
- 22: Versteifungsplatte
- 23: Ausfräsung
- 24: Ausfräsung

## Patentansprüche

1. Spannvorrichtung mit Versteifungsplatte (22) zum Spannen von Werkstücken, Wechselpaletten (20) oder Vorrichtungen mit einem oder mehreren ersten Spannmitteln (16), welche eine erste Spannebene bilden, und einem oder mehreren zweiten Spannmitteln (18), welche eine zweite Spannebene bilden, die unter einem Winkel, vorzugsweise rechtwinklig, zur ersten Spannebene angeordnet ist, **dadurch gekennzeichnet, dass** Zahl und Anordnung der ersten Spannmittel (16) der Zahl und Anordnung der zweiten Spannmittel (18) entspricht, derart, dass die Versteifungsplatte (22) an den Spannmitteln (16 bzw. 18) der Spannebene spannbar ist, an der gerade kein Werkstück, keine Palette (20) oder keine Vorrichtung gespannt ist.

2. Spannvorrichtung nach Anspruch 1, **dadurch gekennzeichnet, dass** die Versteifungsplatte (22) sich hinsichtlich ihrer Steifigkeit und/oder ihres Verformungsverhaltens der Steifigkeit bzw. dem Verformungsverhalten des Werkstücks, der Wechselpalette oder der Vorrichtung entspricht.

3. Spannvorrichtung nach Anspruch 1 oder 2, **gekennzeichnet durch** Durchbrüche, **durch** welche das Werkstück zugänglich ist.

4. Verfahren zum Bearbeiten von Werkstücken, welches an einer Spannvorrichtung nach einem der Ansprüche 1 bis 3 gespannt sind, in dem das Werkstück zunächst mittels der Spannmittel (16 bzw. 18) einer der Spannebenen gespannt und dann bearbeitet wird, während an den Spannmitteln (16 bzw. 18) der anderen Spannebene die Versteifungsplatte (22) gespannt ist, und anschließend das Werkstück und die Versteifungsplatte für die weitere Bearbeitung an der jeweils andere Spannebene gespannt werden.

## Claims

1. A clamping device with reinforcement plate (22) for clamping work pieces, interchangeable pallets (20) or devices with one or more first clamping means (16) which form a first clamping plane, and one or more second clamping means (18) which form a second clamping plane that is arranged at an angle, preferably perpendicular, to the first clamping plane, **characterised in that** the number and configuration of said first clamping means (16) corresponds to the number and configuration of said second clamping means (18), such that the reinforcement plate (22) can be clamped on the clamping means (16 or 18) of the clamping plane, on which no work piece, no pallet (20) or no device is directly clamped.

2. The clamping device according to Claim 1, **characterised in that** the reinforcement plate (22) in regard to its rigidity and/or its deformation behaviour, corresponds to the rigidity or the deformation behaviour of the work piece, of the interchangeable pallet or of the device.

3. The clamping device according to Claim 1 or 2, **characterised by** openings, through which the work piece is accessible.

4. Method for machining work pieces that are clamped on a clamping device according to one of claims 1 to 3, in which the work piece is initially clamped by means of the clamping means (16 or 18) of one of the clamping planes and then machined, while the reinforcement plate (22) is clamped on the clamping means (16 or 18) of the other clamping plane, and subsequently the work piece and the reinforcement plate are clamped on the respective other clamping plane for further machining.

## Revendications

1. Dispositif de serrage à palette de raidissement (22), pour le serrage et la fixation de pièces à usiner, des palettes (20) d'échanges interchangeables ou dispositifs, avec un ou plusieurs moyens de serrage primaires (16) présentant une surface première d'appui et un ou plusieurs moyens de serrage secondaires (18) d'où une deuxième surface d'appui en angle disposée préférentiellement en angle droit et à l'équerre, adapté à la première surface d'appui, **caractérisé en ce que** les chiffres-repères des moyens de serrage primaires (16) correspondent aux chiffres-repères et agencements des moyens de serrage secondaires (18), de manière telle que la palette de raidissement (22) est raccordée aux moyens de serrage (16 respectivement 18) à la surface de raccordement à laquelle pour le moment n'est montée ni pièce à usiner, ni palette (20), ni aucun dispositif.

2. Dispositif de serrage à palette selon la revendication 1, **caractérisé en ce que** la palette de raidissement (22) concernant sa rigidité et/ou sa résistance à la déformation par rapport à la pièce à usiner, à la palette interchangeable, ou au dispositif, est en rapport avec ces contraintes.

3. Dispositif de serrage à palette selon la revendication 1 ou 2, **caractérisé par** des espaces libres évidés permettant l'accès à la pièce à usiner.

4. Procédé pour l'usinage de pièces à réaliser, la pièce étant fixée par un dispositif selon l'une des revendications 1 à 3, dans lequel la pièce à usiner est fixée par l'intermédiaire des moyens de serrage (16 respectivement 18) à l'une des surfaces de serrage par les moyens de serrage cependant que les moyens de serrage (16 respectivement 18) sont solidarisés à la palette de raidissement (22) et que par voie de conséquences, la pièce à usiner et la palette de raidissement pour la suite des travaux à effectuer sont fixés à d'autres surfaces d'appui et de serrage.
